# EUROPÄISCHE PATENTSCHRIFT

(11) **EP 2 825 488 B1**
(45) Veröffentlichungstag und Bekanntmachung des Hinweises auf die Patenterteilung: **14.09.2016**
(21) Anmeldenummer: 13709825.7
(22) Anmeldetag: 04.03.2013
(51) Int. Cl.: B65G 47/08, B65G 47/84, B65B 35/40, B65G 57/24

(54) **VERFAHREN UND VORRICHTUNG ZUR HORIZONTALEN ÜBERGABE VON ARTIKELLAGEN ZWISCHEN BENACHBARTEN MODULEN**
METHOD AND DEVICE FOR HORIZONTALLY TRANSFERRING LAYERS OF ARTICLE BETWEEN ADJACENT MODULES
PROCÉDÉ ET DISPOSITIF SERVANT À TRANSFÉRER DE MANIÈRE HORIZONTALE DES COUCHES D'ARTICLES ENTRE DES MODULES ADJACENTS

(30) Priorität: 14.03.2012 DE 102012204027
(43) Veröffentlichungstag der Anmeldung: 21.01.2015
(73) Patentinhaber: Krones AG, 93073 Neutraubling (DE)
(72) Erfinder: BEER, Erhard, 93073 Neutraubling (DE); HAAS, Johann, 93073 Neutraubling (DE); HERTEL, Florian, 93073 Neutraubling (DE); OSTERHAMMER, Martin, 93073 Neutraubling (DE)
(74) Vertreter: Benninger, Johannes
(86) Internationale Anmeldenummer: PCT/EP2013/054266
(87) Internationale Veröffentlichungsnummer: WO 2013/135513

(56) Entgegenhaltungen:
- WO-A2-2010/100545
- DE-A1- 4 207 725
- FR-A1- 2 259 750
- US-A- 4 934 509

## Beschreibung

Die vorliegende Erfindung betrifft eine Transfereinheit zur horizontalen Verschiebung einer Artikelgruppe oder Artikellage zwischen wenigstens zwei benachbarten Modulen unter weitgehender Beibehaltung der Relativpositionen einer die Artikelgruppe oder -lage bildenden Mehrzahl von Artikeln relativ zueinander mit den Merkmalen des unabhängigen Anspruches 1.

Werden Gruppen von Artikeln mittels Schubbalken oder anderer geeigneter Überschubmittel oder auch mit beweglichen Auflageebenen in horizontaler Richtung in eine definierte Position verschoben, so besteht je nach Geschwindigkeit der Verschiebebewegung beim Erreichen der Endposition ein gewisses Risiko, dass sich die Artikel innerhalb der Gruppe relativ zueinander bewegen. Unter ungünstigen Umständen, insbesondere bei einer starken Verzögerung am Ende der Überschubbewegung, können sogar einzelne Artikel umfallen. In aller Regel besteht für die in Überschubrichtung zuvorderst stehenden Artikel das größte Risiko für ein Umfallen oder Verrutschen, so dass das zuvor bestehende Lagenbild nicht in der gewünschten Weise aufrechterhalten werden kann. Aus diesem Grund sind die realisierbaren Überschubgeschwindigkeiten begrenzt. Insbesondere vor dem Erreichen der gewünschten Endposition ist die Geschwindigkeit ggf. moderat zu reduzieren, um eine zu plötzliche Verzögerung mit dem Risiko der Auflösung des Lagenbildes zu vermeiden. Bei einem Überschub mittels die Artikel umgebenden Rahmens müssen weitere Förder- oder Handhabungselemente wie bspw. Hubwerke solange warten, bis der Rahmen wieder zurückgefahren ist. Dadurch kann der formschlüssige Überschub nicht zur Erhöhung der Gesamtleistung eines Palettierers o. dgl. genutzt werden.

Die DE 603 07 332 T2 offenbart eine Vorrichtung zum Transportieren und Einschachteln einer Gruppe von Gegenständen, die während der Förderung mittels einer Halteeinrichtung in einer vorbestimmten Position gehalten werden, so dass die Gegenstände als Gruppe stabil befördert werden können. Die Gegenstände sollen dadurch während ihrer Förderung und Übergabe an eine weitere Verpackungseinheit insbesondere am Umfallen gehindert werden.

Ein Verfahren zum Bilden, Halten, Trennen und Transportieren von Stapeln hinter einer Ablegevorrichtung ist weiterhin aus der DE 41 17 434 A1 bekannt. Mehrere
Stapelstützen sorgen für die Stabilität der Stapel und folgen zu diesem Zweck jeweils den Bewegungsverläufen der Stapel.

Die DE 44 35 981 A1 zeigt eine Einrichtung zum Zuführen von zu verpackenden Gegenständen zu einer Verpackungsmaschine. Die Gegenstände werden entlang einer Transportstrecke befördert und mittels Schiebereinrichtungen in die Verpackungsmaschine überführt.

Die FR 2 259 750 A1 zeigt eine Einrichtung zum Transportieren von Gruppen von Gegenständen.

Ein Ziel der vorliegenden Erfindung besteht darin, eine universell und für unterschiedliche Arten von zu transportierenden Artikeln einsetzbare Transfereinheit zum Transport und Überschub von Artikelgruppen oder Artikellagen in vorgegebener Formation zur Verfügung zu stellen, die einen Überschub der Artikelgruppen oder -lagen mit hoher Überschubgeschwindigkeit erlaubt, ohne dass dabei die Artikelformation beeinträchtigt wird. Die Transfereinheit soll sich insbesondere für die Palettierung und/oder Depalettierung von Artikelgruppen in vorgegebener Formation einsetzen lassen.

Das genannte Ziel wird mit dem Gegenstand des unabhängigen Anspruchs 1 erreicht. Weitere vorteilhafte Ausgestaltungen werden durch die Unteransprüche beschrieben. So wird zur Erreichung des genannten Ziels eine Transfereinheit zur horizontalen Verschiebung einer Artikelgruppe oder Artikellage zwischen wenigstens zwei benachbarten Modulen unter weitgehender Beibehaltung der Relativpositionen einer die Artikelgruppe oder -lage bildenden Mehrzahl von Artikeln relativ zueinander vorgeschlagen. Diese Transfereinheit umfasst eine horizontale Auflagefläche, die wahlweise über eine angetriebene Auflageebene verfügen kann oder durch eine antriebslose Gleitebene für die Artikellage gebildet sein kann, wenigstens einen in Förder- oder Überschubrichtung rückseitig an den Artikeln angreifenden ersten Balken oder Schubbalken zum horizontalen Verschieben der Artikellage auf ein benachbartes Modul sowie wenigstens einen frontseitig an der Artikellage angreifenden zweiten Balken oder Anlagebalken, der in seiner Bewegung in Überschubrichtung zumindest temporär mit dem Schubbalken gekoppelt ist. Gemäß der vorliegenden Erfindung ist ein erster horizontaler Bewegungsabschnitt des ersten Balkens oder Schubbalkens zur Herstellung der horizontalen Schubbewegung in Höhe der auf der Auflagefläche bewegten Artikellage länger als ein zweiter horizontaler Bewegungsabschnitt des zweiten Balkens oder Anlagebalkens zur Herstellung der horizontalen Anlagebewegung für die Artikellage, wodurch der Schubbalken in seiner Bewegungsmöglichkeit bspw. über den in Förder- oder Überschubrichtung endseitigen Rand der Auflagefläche hinausreichen und die Artikellage zuverlässig und ohne Unterbrechung auf eine nachgeordnete Einheit wie bspw. eine Beladestation überschieben kann. Auf diese Weise kann der erste horizontale Bewegungsabschnitt des ersten Balkens oder Schubbalkens über den in Förder- oder Überschubrichtung endseitigen Rand der Auflagefläche für die Artikellage hinaus reichen, um die Überführung auf das der Transfereinheit nachgeordnete Modul zu erleichtern

Zudem verfügen der erste Balken und der zweite Balken sinnvollerweise jeweils über separate, unabhängig voneinander steuerbare Antriebseinrichtungen, mit denen die Vorschub- und/oder Rücklaufbewegungen der Schub- und Anlagebalken entweder synchron oder asynchron und unabhängig voneinander steuer- und vorgebbar sind. Auf diese Weise sind die unterschiedlich langen Bewegungsbahnen der in ihren Vorschubbewegungen beiden aufeinander abzustimmenden Balken ausgleichbar, so dass bspw. der Schubbalken zum Ausgleich des längeren Verschiebewegs eine schnellere Rücklaufbewegung ausführen kann.

Bei einer ersten Variante der erfindungsgemäßen Transfereinheit ist die Antriebseinrichtung des ersten Balkens oder Schubbalkens durch einen oberhalb der horizontalen Auflagefläche und abschnittsweise parallel zu dieser endlos umlaufenden ersten Zugmittelantrieb zur Herstellung der horizontalen Schubbewegung in Höhe der auf der Auflagefläche bewegten Artikellage ausgebildet. In gleicher Weise kann die Antriebseinrichtung des zweiten Balkens oder Anlagebalkens durch einen oberhalb der horizontalen Auflagefläche endlos umlaufenden zweiten Zugmittelantrieb zur Herstellung der horizontalen Anlagebewegung in Höhe der auf der Auflagefläche bewegten Artikellage ausgebildet sein. Bei einer alternativen Antriebsvariante kann die Antriebseinrichtung des zweiten Balkens oder Anlagebalkens auch durch einen zumindest abschnittsweise oberhalb der horizontalen Auflagefläche oszillierenden Zugmittel- oder Gestängeantrieb ausgebildet sein, der für die horizontale Anlagebewegung in Höhe der auf der Auflagefläche bewegten Artikellage sorgen kann. Als Gestängeantrieb kommt bspw. auch ein geeigneter Linearantrieb o. dgl. in Frage.

Grundsätzlich können die Schub- und Anlagebalken auf unterschiedliche Weise angetrieben und aufgehängt sein. So können sie bspw. abschnittsweise weitgehend synchron mit umlaufenden Ketten oder Riemen und dabei in ihrer Vorschubbewegung jeweils auf Höhe der zu verschiebenden bzw. abzustützenden Artikel bewegt werden, während sie auf ihren Rücklaufbewegungen oberhalb oder unterhalb des Förderniveaus der beförderten Artikellagen in Gegenrichtung zu deren Förderrichtung zurückbewegt werden können. Um die unabhängigen Bewegungssteuerungen der beiden Balken zu ermöglichen, weist jeder der beiden Zugmittel- oder Gestängeantriebe einen eigenen Antriebsmotor auf, was in der Regel ein Elektromotor ist. Wahlweise können jedoch auch andere Antriebs- und Bewegungsvarianten eingesetzt werden, um die Schubbalken jeweils in Eingriff oder aus dem Eingriff mit den Artikellagen zu bringen. So können die Schubbalken bspw. senkrecht zu ihrer Vorschubrichtung in den Förderweg der Artikellagen eingeschoben oder herausgezogen werden, wahlweise von oben oder von unten oder aus seitlicher Richtung. Auch Kombination der erwähnten Bewegungsführungen und/oder -steuerungen sind möglich.

Eine vorteilhafte Variante kann in diesem Zusammenhang vorsehen, dass der zweite Balken oder Anlagebalken in einem in Förder- oder Überschubrichtung endseitigen Bewegungsanschlag eine Verlängerung der Auflagefläche bildet. Hierbei kann der zweite Balken oder Anlagebalken auf das Niveau der Auflagefläche abtauchen und eine weitgehend fugenfreie Verlängerung dieser Auflagefläche bilden, um eine Lücke zu einem nachfolgenden Modul zu schließen, auf das die Artikellage durch die erwähnte Überschubbewegung überführt wird.

Die erfindungsgemäße Transfereinheit kann insbesondere Teil einer Palettiervorrichtung zur Palettierung durch Stapeln von Artikellagen übereinander auf einem der Transfereinheit nachgeordneten Stapelplatz sein. Bevorzugt ist dabei eine Ausführung denkbar, wonach die erfindungsgemäße Transfereinheit unmittelbar einer Beladestation, z.B. einem Jalousiegreifer oder ähnlichem, vorgeordnet ist. Dabei kann der vertikal beweglichen und die Artikellagen in unterschiedlichen Höhen überschiebenden Transfereinheit ein Gruppiersystem vorgeordnet sein, von dem aus die aus einzelnen Artikeln gebildeten und gruppierten Artikellagen in horizontaler Richtung auf die in selber Höhe befindliche Transfereinheit überschiebbar sind. Die aus einzelnen Artikeln gebildeten und gruppierten Artikellagen können mittels der vertikal beweglichen Transfereinheit auf das Höhenniveau der Beladestation angehoben und/oder abgesenkt werden und können, sobald die Transfereinheit und die Beladestation auf selber Höhe sind, auf diese übergeschoben werden.

Die erfindungsgemäße Transfereinheit kann bspw. ein Teil einer Palettierungsanlage oder einer Depalettierungsanlage sein und zur Realisierung der Vertikalbewegungen an einer Hubwerksäule o. dgl. aufgehängt sein. Der Transfereinheit kann insbesondere eine Gruppierstation vorgeordnet sein, wo die Artikel zu den flächigen Artikellagen zusammengestellt werden, die auf die Transfereinheit geschoben und von dort auf eine nachgeordnete Einheit überschoben werden, mit der sie bspw. palettiert werden können. Die der vertikal beweglichen Transfereinheit nachgeordnete Einheit kann bspw. eine ebenfalls vertikal bewegliche Beladestation o. dgl. sein, mit deren Hilfe die Artikellagen auf einem Stapelplatz wie bspw. einer Palette in mehreren Lagen übereinander abgelegt werden können.

Die vorliegende Erfindung umfasst weiterhin ein Verfahren zur horizontalen Verschiebung einer Artikelgruppe oder Artikellage in eine oder aus einer Transfereinheit gemäß einer der zuvor beschriebenen Ausführungsvarianten. Während dieser horizontalen Verschiebung wird die Artikelgruppe oder Artikellage unter weitgehender Beibehaltung der Relativpositionen einer die Gruppe oder Lage bildenden Mehrzahl von Artikeln relativ zueinander mittels wenigstens eines an den, in Bezug auf die Förder- bzw. Vorschubbewegung rückseits der Artikelgruppe oder Artikellage befindlichen Artikeln angreifenden ersten Balkens oder Schubbalkens in eine zweite Ruhelage überführt, wobei gleichzeitig ein zumindest temporär den in Förderrichtung frontseitig befindlichen Artikeln zugeordneter zweiter Balken oder Anlagebalken der Artikelgruppe oder -lage stets oder zumindest kurz vor oder bei Erreichen der Ruhelage mit geringem Abstand zu den vordersten Artikeln vorauseilt oder an diesen anliegt. Bei dem erfindungsgemäßen Verfahren werden der erste Balken und der zweite Balken in ihren Bewegungen jeweils unabhängig voneinander gesteuert und/oder geregelt. Es sei in diesem Zusammenhang klargestellt, dass die Vorschub- und Verfahrbewegungen des Schubbalkens und des Anlagebalkens zwar grundsätzlich unabhängig voneinander erfolgen können, was jedoch im Sinne des vorliegenden Verfahrens nicht zu jedem Zeitpunkt sinnvoll ist, denn die Vorschubbewegungen sollen im Interesse einer Stabilisierung der Artikellage zumindest abschnittsweise synchron erfolgen. Diese annähernd synchronen Bewegungen sind insbesondere während einer Verzögerungsphase der Artikellage bei der Überschubbewegung und/oder kurz vor dem Stillstand bzw. beim Stillstand der Artikellage erforderlich, nicht jedoch in den übrigen Bewegungsabschnitten. Hier sind keine synchronen Bewegungen erforderlich, so dass die oben erwähnte Unabhängigkeit der Bewegungsverläufe der beiden Balken grundsätzlich gegeben ist. Weiterhin kann der mit dem rückseitig an der Artikellage angreifenden ersten Balken oder Schubbalken bewegungsgekoppelte zweite Balken oder Anlagebalken zumindest in einer definierten Phase während, insbesondere am Ende der Überschubbewegung an der Vorderseite der Artikellage angelegt oder in einen geringen Abstand zur Vorderseite gebracht werden und der Artikelgruppe oder Artikellage in berührendem Kontakt oder gering beabstandet vorauseilen.

Bei der erfindungsgemäßen Transfereinheit und beim Verfahren zur horizontalen Verschiebung der Artikellagen greift der erste Balken bzw. Schubbalken an den in Bezug auf die Förder- bzw. Vorschubbewegung rückseits der Artikellage befindlichen Artikeln an und verschiebt dadurch die gesamte Artikellage, die in diesem Förderabschnitt sinnvollerweise seitlich geführt ist, um eine Auflösung der Artikelformation durch seitliches Ausbrechen einzelner Artikel zu verhindern. Durch die rückseitige Einwirkung des Schubbalkens und die seitlichen Führungen können Relativpositionen einer die Artikelgruppe bildenden Mehrzahl von Artikeln relativ zueinander weitgehend beibehalten werden; d.h. das Lagenbild der verschobenen Artikelgruppe bleibt dabei weitgehend aufrechterhalten. Die Transfereinheit umfasst zudem einen zumindest temporär den in Förderrichtung frontseitig befindlichen Artikeln zugeordneten zweiten Balken bzw. Anlagebalken, welcher der Artikellage stets oder zumindest kurz vor oder bei Erreichen der Ruhelage mit geringem Abstand zu den vordersten Artikeln vorauseilt oder an diesen anliegt. Die Steuerung des zweiten Balkens oder Anlagebalkens in Abhängigkeit von der Förderbewegung der Artikellage umfasst sowohl eine Bewegungssteuerung, bei welcher der Anlagebalken der Artikellage in geringem Abstand vorauseilt als auch eine Bewegungssteuerung, bei welcher der Anlagebalken an der Artikelgruppe zumindest kurz vor oder bei Erreichen der Ruhelage anliegt und diese somit zumindest während der letzten Phase des Abbremsvorganges kontaktiert und stabilisiert. Darüber hinaus umfasst die Erfindung eine weitere Variante der Bewegungssteuerung, bei welcher der Anlagebalken die Artikelgruppe oder Artikellage zwar zunächst während ihres Verzögerungsvorganges stabilisiert, sich jedoch unmittelbar vor Erreichen des Stillstandes wieder von der Artikelgruppe oder -lage entfernt. Dies kann damit zusammenhängen, dass die Verzögerung der Artikelgruppe oder -lage nicht gleichmäßig erfolgt, sondern kurz vor Erreichen der Ruhelage allmählich sanfter wird, um einen plötzlichen, ruckartigen Stopp der Artikelgruppe oder -lage zu vermeiden. Bei einem derartigen sanften Anhaltevorgang, dem eine Verzögerungsphase mit stärkerer Verzögerung von einer höheren Fördergeschwindigkeit vorausgegangen sein kann, ist eine Kontaktierung der Artikelgruppe mit dem Anlagebalken unmittelbar vor dem Stillstand nicht mehr erforderlich, so dass dieser bereits wieder in beschleunigter Bewegung von der Artikelgruppe entfernt werden kann. Auf die beschriebene Weise kann verhindert werden, dass die zuvorderst stehenden Artikel der verschobenen Artikelgruppe verschoben werden oder umkippen können, wenn die Artikelgruppe oder -lage verzögert wird oder zum Stillstand kommt, insbesondere bei Erreichen einer Zielposition der Artikelgruppe. Grundsätzlich können die einzelnen Artikel der beförderten Artikelgruppe nicht nur beim Reduzieren der Überschubgeschwindigkeit destabilisiert werden. Auch allgemein beim Beschleunigen oder aber auch durch das Überschieben von der einen Fördereinheit des Moduls zur Fördereinheit des nachfolgenden Moduls kann es bedingt durch hohe Überschubgeschwindigkeiten oder aber auch durch die Übergänge zwischen den zwei Förderern zu einem Verrutschen oder Umkippen einzelner Artikel kommen, was durch die erfindungsgemäße Bewegungssteuerung des der Artikelgruppe vorauseilenden und/oder dort anliegenden Anlagebalkens verhindert werden soll.

Da der Schubbalken die Artikelgruppe typischerweise gegenüber einer Auflageebene verschiebt, auf der die verschobenen Artikel gleiten, besteht zwischen den Auflageflächen der Artikel und der Auflageebene eine permanente Gleitreibung, die für einen Reibungswiderstand zwischen den gleitenden Oberflächen sorgt. Aus diesem Grund kann eine starke Verzögerung der Artikelgruppe zu einem Umkippen einzelner Artikel oder zu deren Verschieben gegenüber den benachbarten Artikeln führen, was durch den an der Vorderseite der Artikelgruppe angelegten Anlagebalken zuverlässig verhindert werden kann. Wahlweise kann die Transfereinheit oder die Module, zwischen denen die Artikel verschoben werden, über eigene Antriebe und angetriebene Auflageflächen verfügen, bspw. über sog. Mattenförderer o. dgl., so dass die Überführungsbewegungen der Artikel unterstützt werden. Bei antriebslosen Modulen - dies können bspw. sog. Transfersysteme oder Transfertische o. dgl. Förder- und/oder Hubelemente sein - ist es sinnvoll, die Auflageebenen, auf denen die Artikel verschoben werden, möglichst reibungsarm zu gestalten. So können für diese Auflageebenen bspw. Holzplatten oder Kunststoffplatten eingesetzt werden, die ggf. Längsprofilierungen in Form von Stegen, Rippen oder Nuten aufweisen können. Es wäre auch denkbar, dass die Auflagefläche aus einer Kombination der genannten Holz-, Kunststoff- und/oder Metallmaterialien besteht. Zudem könnten geeignete Beschichtungen vorgesehen sein, um die Auflagefläche in ihrem Verlauf in Überschubrichtung betrachtet mit unterschiedlichen Reibungskoeffizienten zu versehen.

Die erfindungsgemäße Transfereinheit und das Verfahren zu ihrer Steuerung ermöglicht durch eine solche annähernd formschlüssige Übergabe einer Lage von Artikeln bzw. einer formatierten Artikelgruppe von einer Station zu einer folgenden Station insbesondere schnelle Verzögerungen, kann jedoch die Artikellage auch während der übrigen Phasen einer Überschubbewegung stabilisieren, da ein sich mit den Vorschubbewegungen der Artikellage mitbewegender Rückhaltebalken oder mitfahrender Anschlag die Lage sichern kann. Das Überschieben einer Lage von Artikeln, Gebinden oder Behältern kann ohne die Gefahr von umfallenden Gebinden oder Behältern erfolgen. Die Zeit für einen Überschub kann dadurch wesentlich verkürzt werden. Nach dem Überschub müssen andere Achsen (z.B. Hubwerke) nicht warten, bis z.B. ein Rahmen wieder zurückgefahren wird, um die andere Achsen (z.B. Hubwerke o. dgl.) freizugeben.

Der zumindest phasenweise gleichzeitig mit dem rückseitig angreifenden Schubbalken, insbesondere am Ende der Überschubbewegung an der Vorderseite (in Bezug auf die Überschub- oder Förderrichtung der Artikel) angreifende zweite Schubbalken, der als Bremsbalken oder Anlagebalken verstanden werden kann, kann wahlweise an der Vorderseite der Artikelgruppe angelegt oder in einen geringen Abstand zur Vorderseite gebracht sein, so dass er der Artikelgruppe in berührendem Kontakt oder gering beabstandet vorauseilt und somit eine hohe Überschubgeschwindigkeit und eine starke Verzögerung der Artikelgruppe erlaubt, ohne dass die Gefahr der Auflösung der Artikelformation durch Umkippen einzelner Artikel oder durch deren Verrutschen besteht. Grundsätzlich kann es ausreichen, wenn der zweite Balken oder Anlagebalken nur zum Ende der Überschubbewegung, insbesondere während der Verzögerung der Artikelgruppe bis zum Stillstand, in Kontakt mit den zuvorderst beförderten Artikeln gebracht wird, da im Wesentlichen nur in dieser Phase die vorderste Reihe der Artikel zum Umkippen in Förderrichtung neigt, während die Phasen der Überschubbewegung mit annähernd konstanter Überschubgeschwindigkeit keine Probleme verursachen. Wie oben bereits erwähnt, gilt dies zumindest für die Phase mit konstanter Überschubgeschwindigkeit. Sofern jedoch die Artikellage während der Überschubbewegungen ausgeprägter Beschleunigungen und Verzögerungen unterliegt, kann der Anlagebalken bereits während der Überschubbewegung zur Stabilisierung der Artikelgruppe notwendig sein, insbesondere während Phasen stärkerer Verzögerung. Da solche Verzögerungsphasen im Verlauf der Überschubbewegung der Abbremsung der Artikelgruppe bis unmittelbar zum Stillstand vorausgehen, können bereits in diesen Phasen einzelne Artikel verrutschen oder kippen, was durch den an den in Förderrichtung zuvorderst bewegten Artikeln einer Artikelgruppe anliegenden (oder in geringem Abstand vorauseilenden) Anlagebalken zuverlässig verhindert werden kann. Bei derartigen Bewegungsverläufen kann es ggf. auch ausreichen, den Anlagebalken nur in diesen genannten Phasen stärkerer Verzögerung zum Einsatz kommen zu lassen, so dass er bei einer sanften Verzögerung in der Schlussphase sich bereits wieder von den Artikeln entfernen kann.

Annähernd synchrone Bewegungen der beiden Balken zumindest während der Verzögerung der Artikelgruppe können dafür sorgen, dass die Stabilität der Artikelformation mit der gewünschten Zuverlässigkeit aufrechterhalten werden kann. Grundsätzlich kann das erfindungsgemäße Verfahren für beliebige Förderbewegungen von Artikelgruppen oder Artikellagen o. dgl. eingesetzt werden, bspw. zur Palettierung von solchen Artikellagen oder Gruppen von Artikeln oder auch zu deren Depalettierung, wobei jeweils die zuvor bestehende Artikelformation bzw. das bestehend Lagenbild weitestgehend aufrechterhalten wird.

Die Transfereinheit kann grundsätzlich zwischen allen denkbaren Arten und Varianten in ihrem Förderstrom zu verbindender Module innerhalb von Handhabungs- und/oder Verpackungsmaschinen, Fördereinheiten etc. angeordnet sein. So können gesamte Lagenbilder bzw. Artikellagen von einer Fördereinrichtung wie bspw. einem horizontal fördernden Mattenförderer o. dgl. in die als Hub- und/oder Umsetzeinrichtung fungierende Transfereinheit und von dort bspw. zu einen Jalousiegreiferkopf überführt werden, der die Artikellagen bspw. zu deren Palettierung in mehreren Lagen übereinander stapeln kann.

Die wenigstens zwei parallel zur Förderrichtung der Artikelgruppen oder Artikellagen bewegbaren Schub- bzw. Anlagebalken können sich je nach Bedarf innerhalb von definierten Bewegungsräumen bewegen, die sich wahlweise über Schnittstellen zwischen benachbarten Modulen hinweg erstrecken können. So kann sich ggf. der die Artikel schiebende hintere erste Balken oder Schubbalken gemäß einer vorteilhaften Ausführungsvariante zumindest über eine kurze Strecke in einen Förderweg in das Modul hinein bewegen, in das die Artikellage hineingeschoben wird. Dies kann bspw. die zuvor erwähnte Hub- und/oder Umsetzeinrichtung bzw. der Jalousiegreiferkopf o. dgl. sein. Dieses Transportmodul muss entsprechend vorbereitet sein, um den Schubbalken zumindest kurzzeitig aufzunehmen, bis die überführte Artikellage zum Stillstand gekommen ist und keine Artikel mehr verzögert werden und deshalb kippen oder verrutschen können. Um diesen Bewegungsbereich für den Schubbalken ermöglichen zu können, könnte dieser bzw. seine Führungselemente wahlweise Teil des zweiten Moduls, d.h. der Hub- und/oder Umsetzeinrichtung bzw. des Jalousiegreiferkopfes, sein. Da eine solche Ausführungsvariante relativ aufwändig in ihrer Konstruktion ist, sieht eine bevorzugtere Variante vor, dass die Führungselemente, welche für den Antrieb und die Bewegungssteuerung des ersten Balkens bzw. Schubbalkens verantwortlich sind, zumindest während des Überschubs in dieses zweite Modul hineinreichen, was bspw. durch einen geeigneten Gestänge- oder Linearantrieb o. dgl. erreicht werden kann. Eine entsprechende Bewegungssteuerung ist für den die Artikellage oder Artikelgruppe von vorne abbremsenden zweiten Balken oder Anlagebalken nicht erforderlich, da diese Aufgabe normalerweise vom Anlagebalken des Moduls übernommen wird, in das die Artikellage hineingeschoben wird.

Wenn im vorliegenden Zusammenhang meist von Artikeln oder von Artikellagen die Rede ist, so können dies grundsätzlich die unterschiedlichsten Packgüter sein, bspw. einzelne Kartons, Getränkebehälter wie Flaschen, Dosen oder Getränkekartons, Stückgüter etc., die in vorgegebenen Anordnungen palettiert, gestapelt oder depalletiert werden können. Als Artikel kommen auch Gebinde in Frage, bspw. sog. Foliengebinde, Umreifungsgebinde o. dgl.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt zwei schematische Ansichten einer beginnenden Überschubbewegung einer Artikellage von einem Modul auf ein benachbartes zweites Modul.
Fig. 2 zeigt in zwei Ansichten die erfolgte Überschubbewegung gemäß Fig. 1.
Fig. 3 zeigt zwei schematische Ansichten einer erfindungsgemäßen Überschubbewegung einer Artikellage von einem Modul auf ein benachbartes zweites Modul.
Fig. 4 zeigt die entsprechend Fig. 3 begonnene weitere Überschubbewegung.
Fig. 5 bis Fig. 9 zeigen in schematischen Ansichten aufeinander folgende Prozessschritte beim Überschub einer Artikellage zwischen drei benachbarten Modulen.
Fig. 10 zeigt eine schematische Seitenansicht einer Ausführungsvariante einer erfindungsgemäßen Transfereinheit.
Fig. 11 zeigt eine schematische Draufsicht der Transfereinheit gemäß Fig. 10.
Fig. 12 zeigt die Transfereinheit gemäß Fig. 10 in zwei perspektivischen Ansichten.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung oder das erfindungsgemäße Verfahren ausgestaltet sein können und stellen keine abschließende Begrenzung dar.

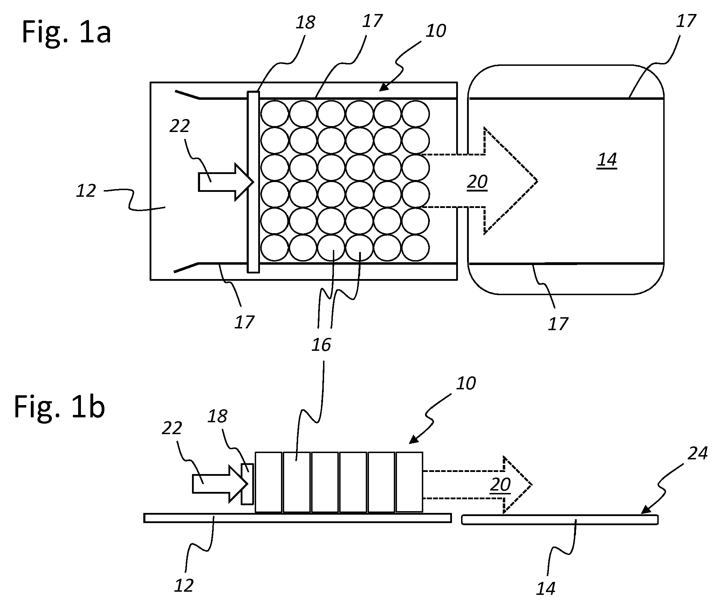

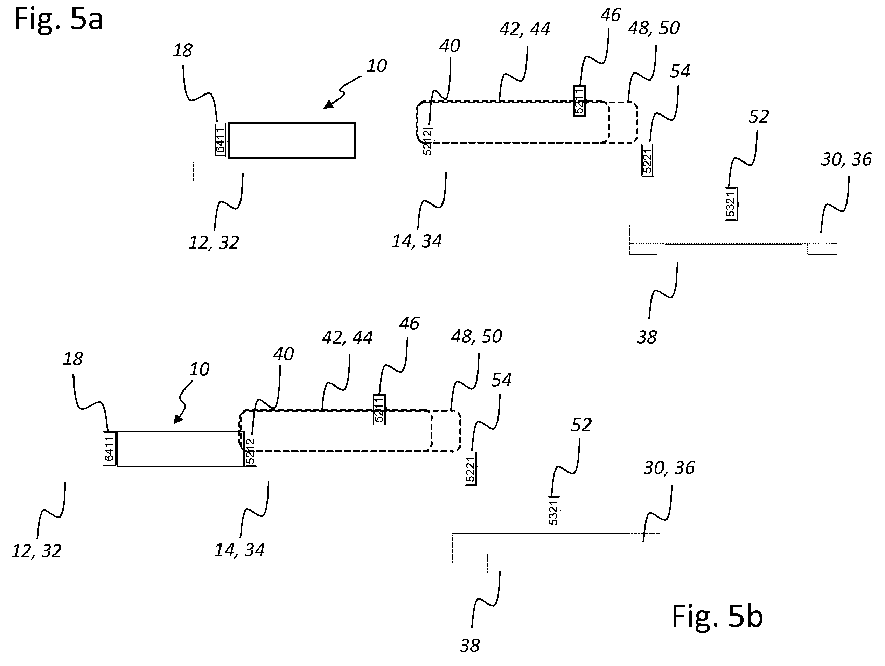

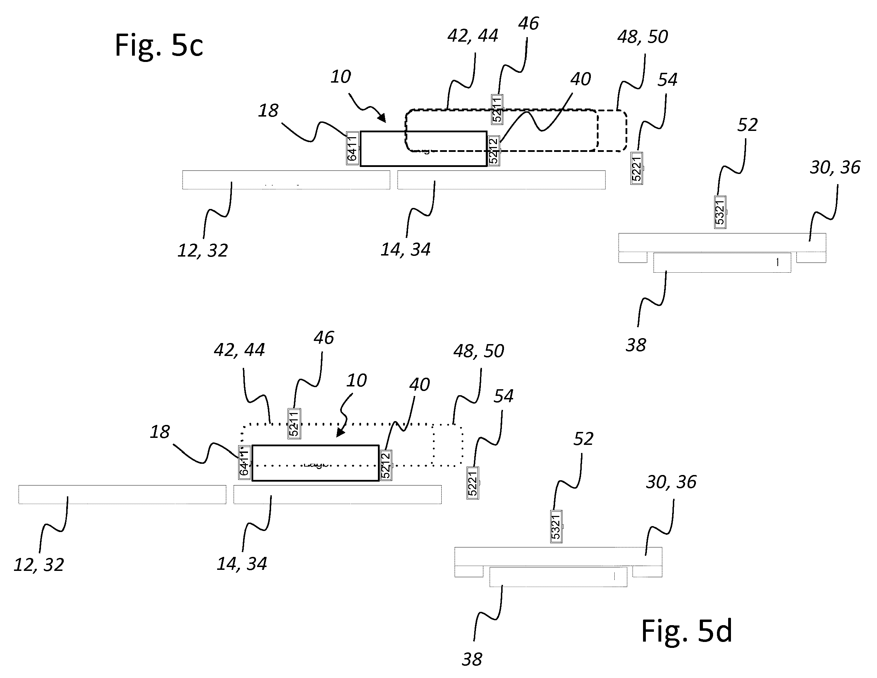

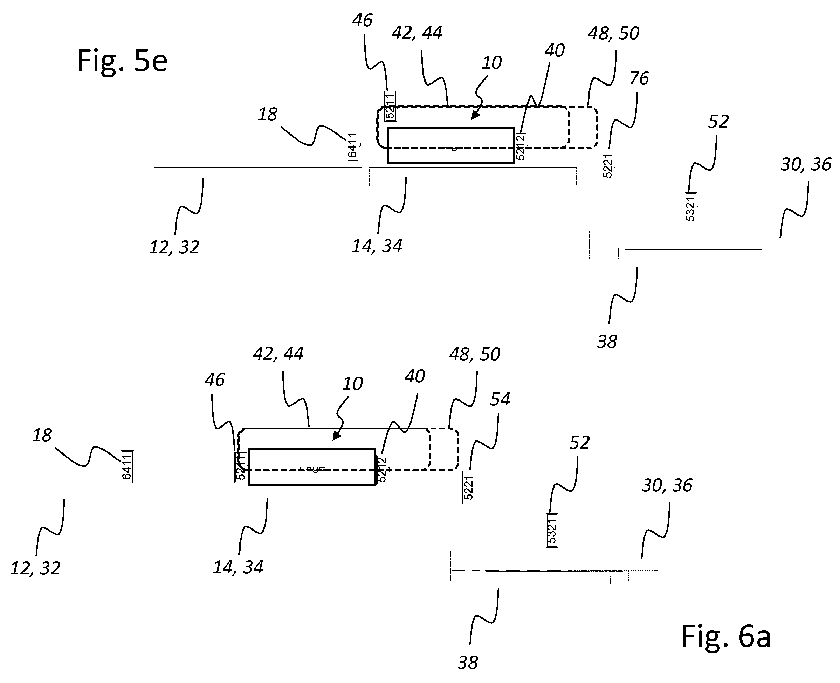

Die Fig. 1 zeigt in einer schematischen Draufsicht (Fig. 1a) und in einer schematischen Seitenansicht (Fig. 1 b) eine horizontale Verschiebung einer Artikelgruppe oder Artikellage 10 aus einer ersten Lage von einem ersten Modul 12, bspw. von einem Gruppiertisch, der Teil eines Gruppiersystems sein kann, in eine zweite Position auf ein zweites Modul 14, das bspw. ein Hubmodul, eine Beladestation oder eine Transfereinheit (vgl. Figuren 5 ff.) o. dgl. sein kann. Die gezeigte Artikellage 10 umfasst im gezeigten Ausführungsbeispiel eine regelmäßige Anordnung einer Mehrzahl von Artikeln 16, die im Rechteckverbund stehen und ohne Änderung des Lagenbildes mittels eines Schubbalkens 18 vom ersten Modul 12 auf das zweite Modul 14 geschoben werden sollen. Die Artikel 16 können bspw. Kartons, Gebinde mit mehreren einzelnen Artikeln oder Behältern oder auch einzelne Behälter sein, die in regelmäßiger Anordnung nebeneinander stehen. Normalerweise weisen die Artikel 16 eine Höhe auf, die größer ist als eine Seitenkante ihrer Grundfläche, so dass sie bei starken Beschleunigungen oder Verzögerungen zum Kippen neigen können. Selbst wenn dies nicht zutrifft, d.h. bei Artikeln 16 mit relativ geringer Höhe, könnte bei hohen Beschleunigungen, hohen Überschubgeschwindigkeiten und starken Verzögerungen beim Überschieben der Lage von einem Modul in das nachfolgende Modul, bedingt durch die Übergänge, ein Auseinanderdriften bzw. Verrutschen der Gebinde bzw. Artikel 16 auftreten.

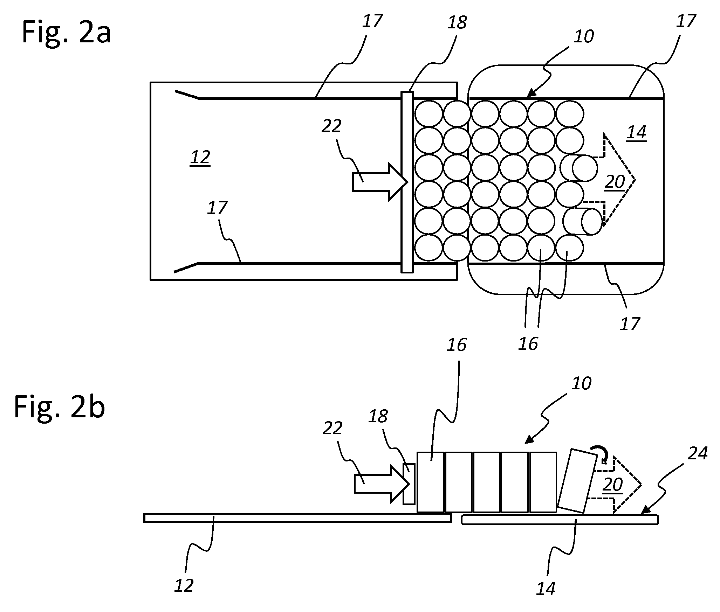

Der für die Verschiebung der Artikelgruppe oder Artikellage 10 verantwortliche Schubbalken 18 greift an den in Bezug auf die Förder- bzw. Vorschubbewegung 20 rückseits der Artikelgruppe 10 befindlichen Artikeln 16 an und verschiebt dadurch die gesamte Artikelgruppe oder Artikellage 10, die ggf. zur Aufrechterhaltung des Lagenbildes seitlich geführt sein kann. Die optionalen seitlichen Führungen sind in der Fig. 1a und in der Fig. 2a mit der Bezugsziffer 17 bezeichnet. Durch die rückseitige Einwirkung des Schubbalkens 18 und die beidseitig des Überschubweges angeordneten seitlichen Führungen 17 können Relativpositionen der die Artikelgruppe 10 bildenden Mehrzahl von Artikeln 16 relativ zueinander weitgehend beibehalten werden; d.h. das Lagenbild der verschobenen Artikelgruppe 10 bleibt entlang der Vorschubbewegung 20 weitgehend aufrechterhalten.

In den folgenden Figuren wurde auf die Darstellung der seitlichen Führungen 17 aus Gründen der besseren Übersichtlichkeit verzichtet, was jedoch nicht bedeutet, dass die Führungen dort nicht vorhanden wären.

Wie die beiden schematischen Darstellungen der Fig. 2 mit der Draufsicht der Fig. 2a und der Seitenansicht der Fig. 2b verdeutlichen, erfolgt die Vorschubbewegung 20 nicht mit konstanter Geschwindigkeit, da die Schiebebewegung 22 des Schubbalkens 18 zumindest kurz vor dem Erreichen der Zielposition der Artikellage 10 auf dem zweiten Modul 14 allmählich langsamer wird, damit sie nicht plötzlich zum Stillstand kommt. Dennoch besteht die Gefahr, dass einzelne der zuvorderst in der verschobenen Artikellage 10 stehenden Artikel 16 verrutschen oder umkippen können, wenn die Artikellage 10 stärker verzögert wird oder plötzlich zum Stillstand kommt, insbesondere bei Erreichen der Zielposition der Artikellage 10. Da der Schubbalken 18 die Artikellage 10 typischerweise gegenüber einer Auflageebene 24 des ersten und/oder zweiten Moduls 12, 14 verschiebt, auf der die verschobenen Artikel 16 gleiten, besteht zwischen den Bodenflächen der Artikel 16 und der Auflageebene 24 eine permanente Gleitreibung, die für einen Reibungswiderstand zwischen den gleitenden Oberflächen sorgt. Aus diesem Grund kann eine starke Verzögerung der Artikellage 10 zu einem Umkippen einzelner Artikel 16 oder zu deren Verschieben gegenüber den benachbarten Artikeln 16 führen, was durch die vorliegende Erfindung verhindert werden soll.

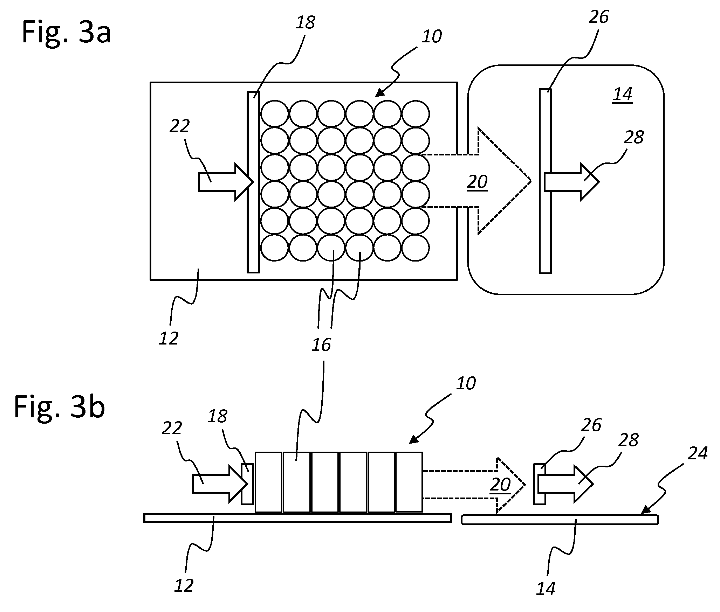

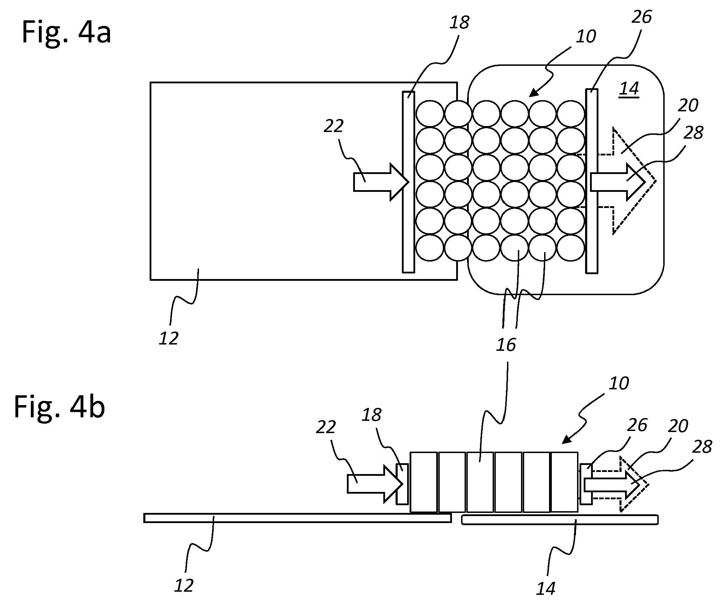

So verdeutlichen die Figuren 3 und 4 in schematischen Draufsichten (Fig. 3a und Fig. 4a) sowie in schematischen Seitenansichten (Fig. 3b und Fig. 4b) einen wesentlichen Aspekt der vorliegenden Erfindung, bei der vorgesehen ist, dass ein zumindest temporär den in Förderrichtung frontseitig befindlichen Artikeln 16 zugeordneter Anlagebalken 26 der Artikellage 10 zumindest kurz vor oder bei Erreichen der Ruhelage auf dem zweiten Modul 14 mit geringem Abstand zu den vordersten Artikeln 16 der Artikellage 10 vorauseilt oder an diesen anliegt. Wahlweise kann der Anlagebalken 26 im Bereich des zweiten Moduls 14 parallel zur Vorschubbewegung 20 in einer Weise zwischen zwei Endpositionen bewegt werden, dass die Schiebebewegung 28 des Anlagebalkens 26 zumindest temporär parallel und gleichsinnig zur Vorschubbewegung 20 der Artikellage 10 und der Schiebebewegung 22 des Schubbalkens 18 erfolgt. Um zu verhindern, dass die zuvorderst stehenden Artikel 16 der verschobenen Artikellage 10 gegenüber den übrigen Artikeln 16 oder dem vorgesehenen Lagenbild verschoben werden oder umkippen, muss diese Schiebebewegung 28 des Anlagebalkens 26 zumindest in Phasen starker Verzögerung der Artikellage 10 und/oder in der Endphase der Überschubbewegung annähernd synchron zur Schiebebewegung 22 des Schubbalkens 18 erfolgen, insbesondere in einer Brems- oder Verzögerungsphase der Artikellage 10, wenn diese verzögert wird und zum Stillstand kommt. Wie bereits erwähnt, kann der Anlagebalken 26 je nach Bewegungsverlauf der Vorschubbewegung 20 der Artikellage 10 auch vorzeitig in Pfeilrichtung 28 von der Artikellage 10 entfernt und dabei beschleunigt werden, bevor die Artikellage 10 zum Stillstand kommt. Bei einer solchen Bewegungssteuerung stabilisiert der Anlagebalken 26 die Artikelgruppe 10 zwar zunächst während ihres Verzögerungsvorganges, kann sich jedoch unmittelbar vor Erreichen des Stillstandes wieder von der Artikelgruppe oder -lage 10 entfernen. Dies kann damit zusammenhängen, dass die Verzögerung der Artikellage 10 nicht gleichmäßig erfolgt, sondern kurz vor Erreichen der Ruhelage allmählich sanfter wird, um einen plötzlichen, ruckartigen Stopp der Artikellage 10 zu vermeiden. Bei einem derartigen sanften Anhaltevorgang, dem eine Verzögerungsphase mit stärkerer Verzögerung von einer höheren Fördergeschwindigkeit vorausgegangen sein kann, ist eine Kontaktierung der Artikellage 10 mit dem Anlagebalken 26 unmittelbar vor dem Stillstand nicht mehr erforderlich, so dass dieser bereits wieder in beschleunigter Bewegung 28 von der Artikellage 10 entfernt werden kann.

Wie die Figuren 3 und 4 in schematischer Weise verdeutlichen, ermöglicht das erfindungsgemäße Verfahren durch die dargestellte annähernd formschlüssige Übergabe einer Lage 10 von Artikeln 16 von einer Station (Modul 12) zu einer benachbarten Station (Modul 14) sehr schnelle Über- und Vorschubbewegungen 20 und anschließende relativ starke Verzögerungen, da der sich mit den Vorschubbewegungen 20 der Artikellage 10 mitbewegende Rückhalte- oder Anlagebalken 26 die Lage 10 sichert und stabilisiert. Auch hier sind seitliche Führungen für die Artikellage 10 sinnvoll, auch wenn sie in den Figuren nicht eingezeichnet sind. Grundsätzlich kann es ausreichen, wenn der zweite Schubbalken oder Anlagebalken 26 lediglich zum Ende der Überschubbewegung, insbesondere während der Verzögerung der Artikellage 10 bis zum Stillstand, in Kontakt mit den zuvorderst beförderten Artikeln 16 gebracht wird (vgl. Fig. 4a und Fig. 4b), da im Wesentlichen nur in dieser Phase die vorderste Reihe der Artikel 16 zum Umkippen in Förderrichtung neigt.

Die schematischen Ansichten der Figuren 5 bis 9 verdeutlichen in insgesamt dreiundzwanzig Einzeldarstellungen aufeinander folgende Prozessschritte beim Überschubs einer Artikellage 10 zwischen drei benachbarten Modulen 12, 14 und 30. In diesem Ausführungsbeispiel ist das jeweils links dargestellte erste Modul 12 durch ein Gruppiersystem 32 gebildet, das eine Artikellage 10 in vorgegebener Formation von einem hier nicht dargestellten vorgeordneten Sortiersystem übernimmt. Ein solches Sortiersystem kann bspw. einen oder mehrere Handhabungsroboter umfassen, die aus einem oder mehreren Artikelzuläufen geschlossene Artikellagen 10 bilden, die in der dargestellten Weise auf das erste Modul 12 bzw. das Gruppiersystem 32 überführt werden. Das Gruppiersystem 32 muss nicht höhenverstellbar oder seitlich verschiebbar sein, sondern kann ortsfest angeordnet sein, was auch aus den Figuren 5 bis 9 hervorgeht. Wahlweise jedoch kann das Gruppiersystem 32 auch höhenverstellbar ausgebildet sein, insbesondere bei einem optionalen Entfall der dem Gruppiersystem 32 nachgeordneten Transfereinheit 34 (bzw. des Transfertischs), die das zweite Modul 14 bildet. Bei einer solchen Konfiguration kann das höhenverstellbare Gruppiersystem 32 für einen direkten Überschub der Artikellagen 10 zur Beladestation 36 vorbereitet sein, die das dritte Modul 30 bildet. In diesem Fall sind die normalerweise dem Transfersystem 34 zugeordneten ersten und zweiten Balken 46 und 40 dem Gruppiersystem 32 zuzuordnen und in geeigneter Weise in ihren Bewegungen zu steuern, so dass das Tranfersystem 34 entfallen kann, ohne dass Einschränkungen in der Funktion damit verbunden sind.

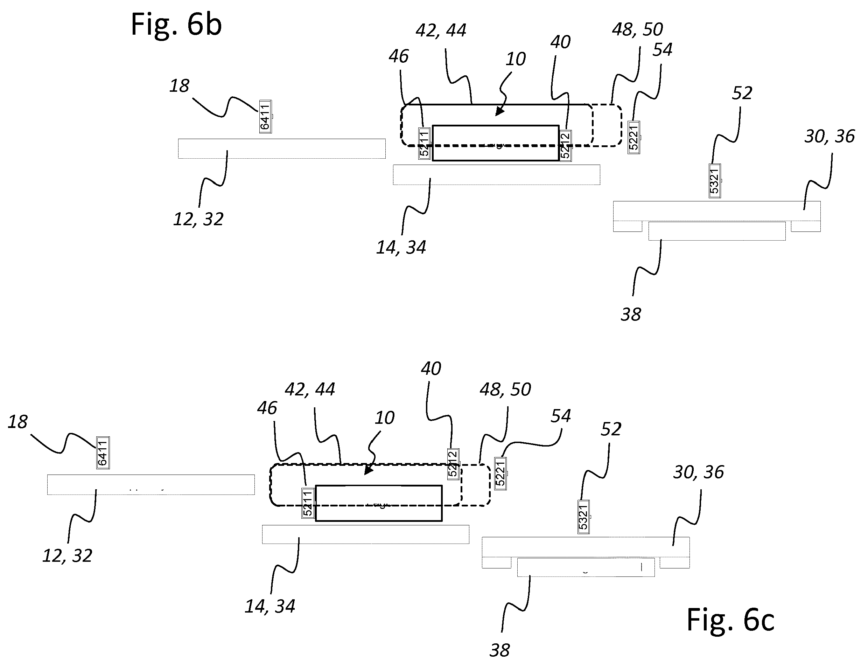

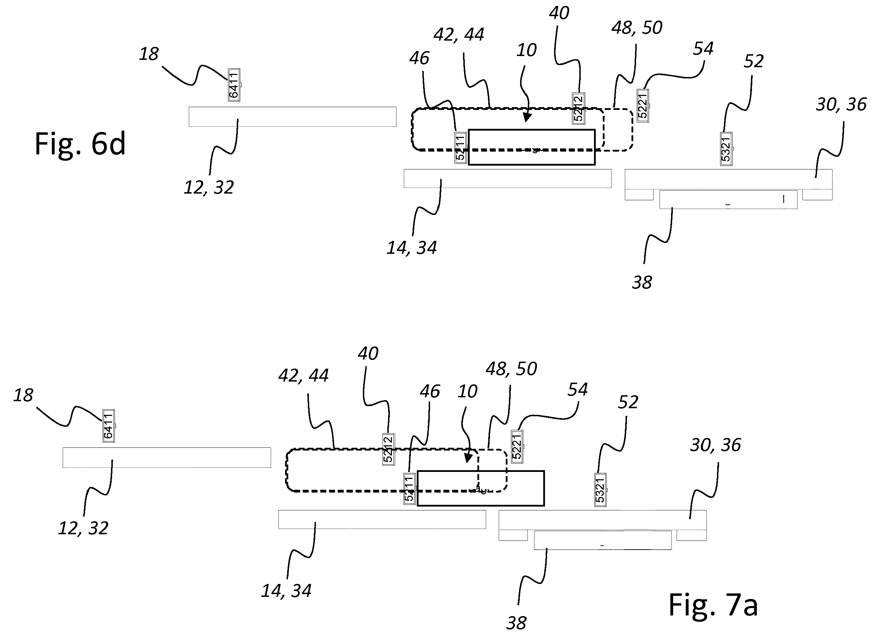

Die Darstellung der Fig. 5a zeigt eine auf dem ersten Modul 12 bzw. dem Gruppiersystem 32 befindliche Artikellage 10, die mittels des horizontal beweglichen Schubbalkens 18 nach rechts auf ein in selber Höhe befindliches zweites Modul 14 verschoben werden kann, wie dies die Fig. 5b verdeutlicht. Das zweite Modul ist im gezeigten Ausführungsbeispiel durch einen sog. Transfertisch bzw. durch die Transfereinheit 34 gebildet, die höhenverstellbar ausgebildet ist, um einen Überschub auf die unterhalb des Gruppiersystems 32 befindliche Beladestation 36 zu ermöglichen. Diese je nach Beladezustand eines darunter angeordneten Palettensegments 38 in der Höhe verstellbare Beladestation 36 bildet im dargestellten Ausführungsbeispiel das dritte Modul 30. Wie es die Figuren 5a bis 5e verdeutlichen, wird die Artikellage 10 mittels des dem ersten Modul 12 zugeordneten, ganz links angeordneten Schubbalkens 18 vom ersten Modul 12 bzw. dem Gruppiersystem 32 in horizontaler Richtung nach rechts auf das zweite Modul 14 bzw. die Transfereinheit 34 überschoben, wobei ein der Transfereinheit 34 zugeordneter Anlagebalken 40 - nachfolgend auch als zweiter Balken 40 bezeichnet - die vorderen Artikel der überschobenen Artikellage 10 stabilisiert und deren Verrutschen oder das Kippen einzelner Artikel verhindert. Der zweite Balken oder Anlagebalken 40 bewegt sich annähernd über die gesamte Länge des zweiten Moduls 14 bzw. der Transfereinheit 34, wie dies die Darstellungen der Fig. 5b bis 5e verdeutlichen. Die Fig. 5d zeigt zudem eine Besonderheit dieser Ausführungsvariante, bei welcher der dem ersten Modul 12 zugeordnete Schubbalken 18 über das Gruppiersystem 32 hinaus auf den Rand des Transfertisches 34 geschoben wird, bevor er gemäß Fig. 5e wieder zurückgezogen wird (vgl. Fig. 6), um eine weitere Artikellage 10 vom ersten Modul 12 bzw. vom Gruppiersystem 32 auf das zweite Modul 14 bzw. auf die Transfereinheit 34 überschieben zu können.

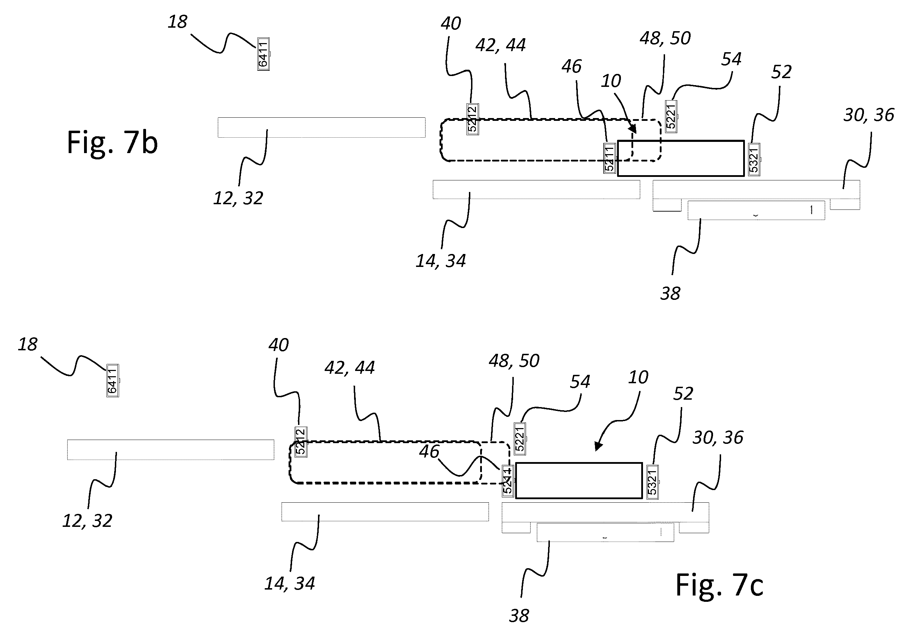

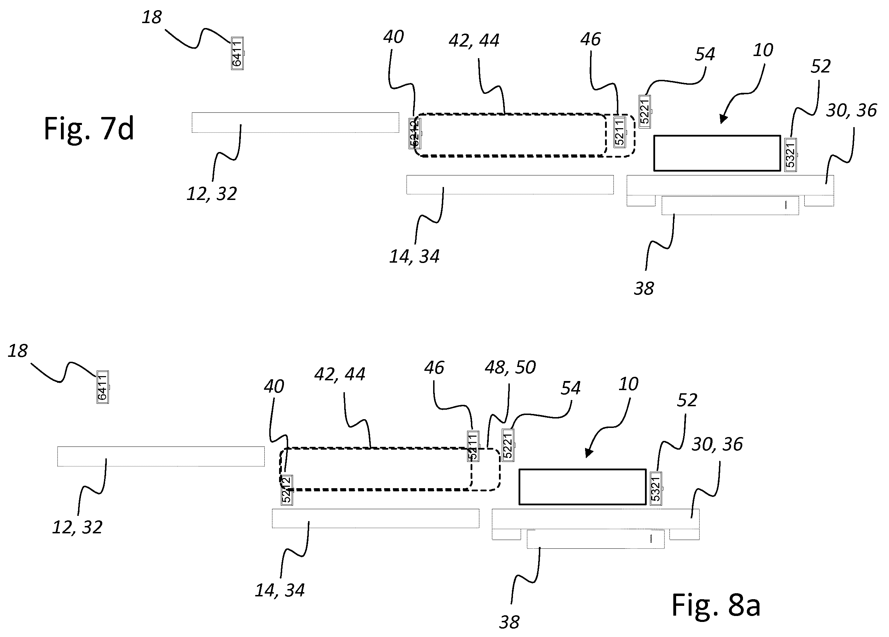

In den Darstellungen der Figuren 5a bis 5e bewegt sich der dem Transfertisch 34 zugeordnete zweite Balken oder Anlagebalken 40 in horizontaler Richtung nach rechts, bis die Artikellage 10 gemäß Fig. 6a und Fig. 6b vollständig auf die Transfereinheit 34 bzw. das zweite Modul 14 überschoben ist. Die Fig. 6c verdeutlicht die anschließende Vertikalbewegung des Anlagebalkens 40, der angehoben wird, um die weitere Überführung der Artikellage 10 nicht zu behindern. Der Anlagebalken bzw. zweite Balken 40 bewegt sich dabei entlang einer geschlossenen zweiten Bewegungsbahn 42, die insbesondere durch einen entsprechenden zweiten Zugmittelantrieb 44 vorgegeben sein kann. Die Darstellung der Fig. 6d verdeutlicht die Rückführbewegung des zweiten Balkens oder Anlagebalkens 40 oberhalb der Artikellage 10 nach links, die sich entsprechend Fig. 7a und Fig. 7b fortsetzt, bis gemäß Fig. 7c und Fig. 7d die Anfangsposition erreicht ist, in welcher der Anlagebalken 40 zur Stabilisierung einer weiteren überschobenen Artikellage 10 eingesetzt werden kann.

Weiterhin verdeutlichen die Figuren 5a bis 5e die Verschiebung eines der Transfereinheit 34 zugeordneten ersten Balkens 46 oder Schubbalkens 46 oberhalb der Artikellage 10 entlang einer ersten Bewegungsbahn 48, die sich zwar über weite Abschnitte mit der zweiten Bewegungsbahn 42 überdecken kann, jedoch über einen von dieser unabhängigen ersten Zugmittelantrieb 50 verfügt, da ein abschnittsweise von der zweiten Bewegungsbahn 42 abweichender Bewegungsverlauf erforderlich ist. So verdeutlichen die Figuren 7b, 7c und 7d einen Verschiebeweg des ersten Balkens 46 oder Schubbalkens, der über die Länge der Transfereinheit 34 hinausreicht und teilweise in den Bereich der Beladestation 36 des dritten Moduls 30 hineinreicht. Dieser erweiterte Verschiebeweg des ersten Schubbalkens 46 ermöglicht einen Überschub der Artikellage 10 in einem Zug vom zweiten Modul 14 auf das dritte Modul 30, ohne dass eine Unterbrechung der Überschubbewegung erforderlich ist.

Während des weiteren Überschiebens der Artikellage 10 auf der Transfereinheit 34 mittels des Schubbalkens 46 und des die Artikellage 10 stabilisierenden zweiten Balkens oder Anlagebalkens 40 wird die Transfereinheit 34 soweit abgesenkt (vgl. Figuren 6b bis 6d), bis das tiefer liegende Niveau der Beladestation 36 erreicht ist (Fig. 6d), so dass die Artikellage 10 mittels des Schubbalkens 46 (Fig. 6d) nach rechts auf die Beladestation 36 überschoben werden kann (vgl. Figuren 7a bis 7c). Ein dieser Beladestation 36 zugeordneter weiterer Anlagebalken 52, der zumindest abschnittsweise annähernd synchron mit dem Schubbalken 46 nach rechts bewegt wird und dabei der Artikellage 10 vorauseilt, sorgt dort für die Stabilisierung der Artikellage 10 und verhindert das Umfallen oder Verrutschen einzelner Artikel. Nach Kontaktierung der Artikellage (Fig. 7b) eilt er der Artikellage 10 bei deren Überschubbewegung nach rechts voraus (Fig. 7c), bis der Schubbalken 46 seine Überschubbewegung beendet hat und entlang der ersten Bewegungsbahn 48 im Bereich der Beladestation 36 vertikal nach oben gefahren wird (Fig. 7d).

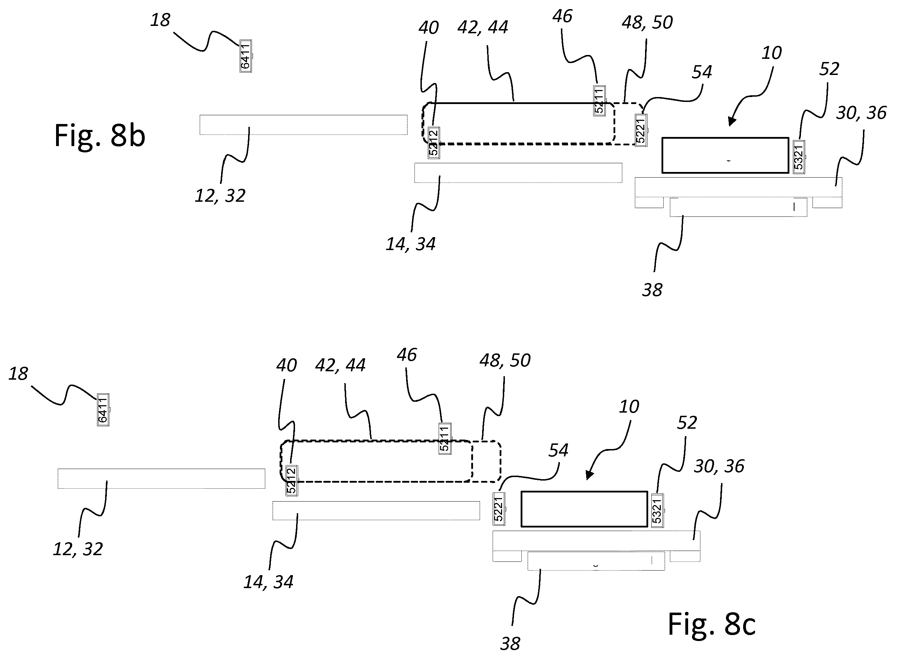

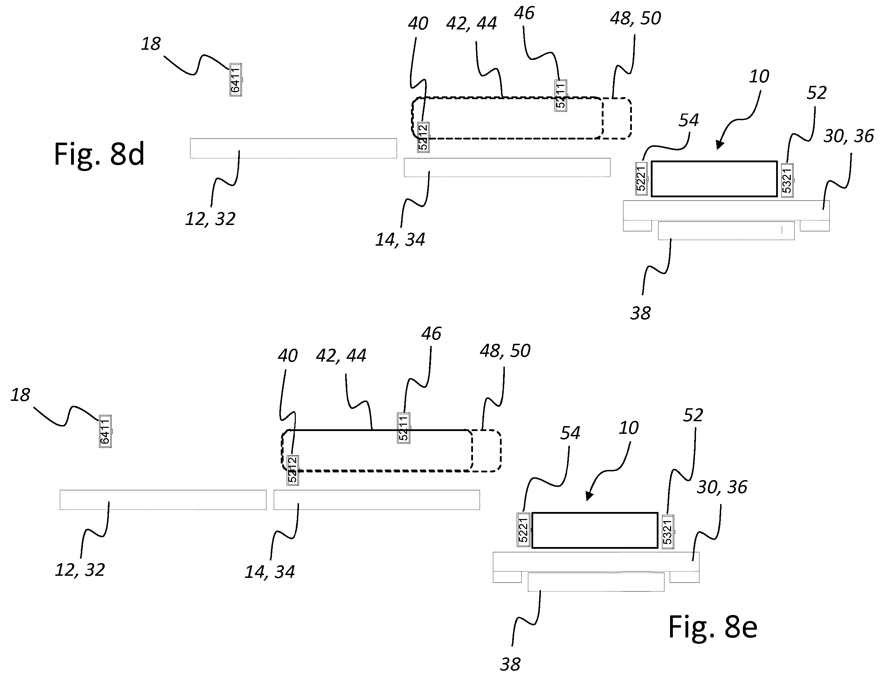

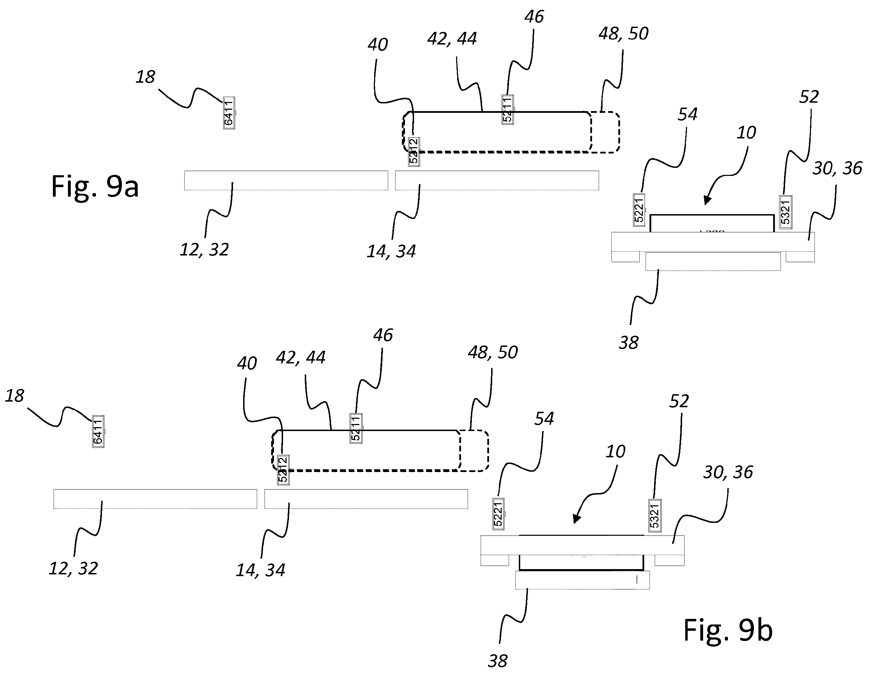

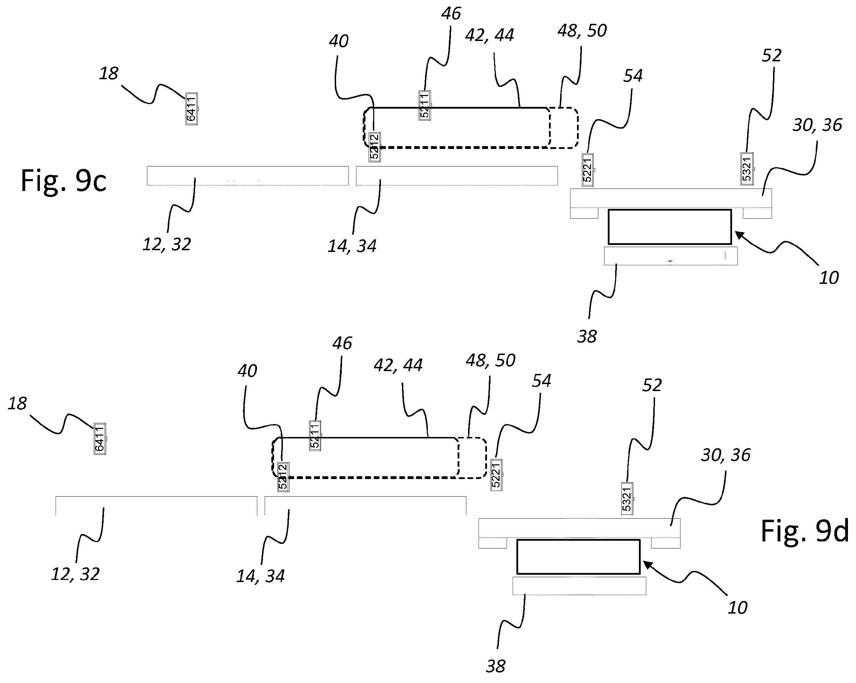

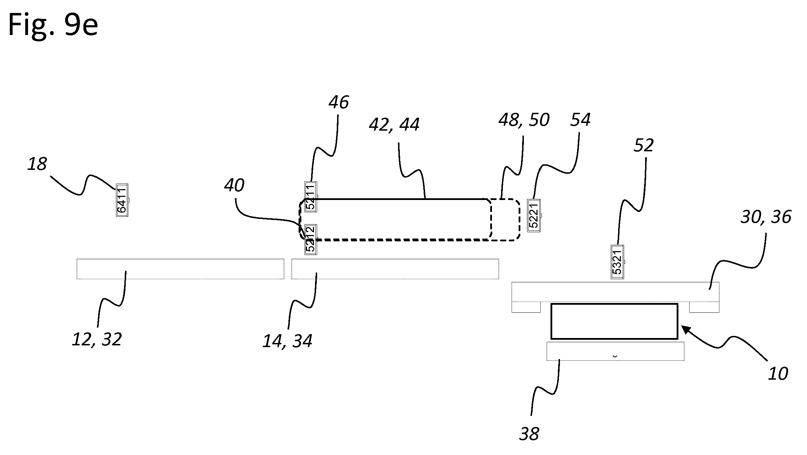

Während die Transfereinheit 34 nach der Übergabe der Artikellage 10 auf die Beladestation 36 wieder vertikal nach oben gefahren werden kann (Fig. 8a, Fig. 8b), senkt sich ein der Beladestation 36 zugeordneter dritter Schubbalken 54 vertikal nach unten (Fig. 8b) bis auf das Niveau der Artikellage 10 (Fig. 8c) und wird anschließend nach rechts verschoben (Fig. 8d), um die Artikellage 10 auf der Beladestation 36 zu zentrieren (Fig. 8e), wobei gleichzeitig der weitere Anlagebalken 52 für die Stabilisierung der Artikellage 10 sorgt. Nach der richtigen Platzierung der Artikellage 10 (vgl. Fig. 8e) wird diese nach unten auf das Palettensegment 38 abgesenkt (Fig. 9a), wonach die Beladestation 36 wieder nach oben gehoben wird (Fig. 9b, Fig. 9c). Eine solche Übergabe der Artikellage 10 kann bspw. mittels eines Jalousie- oder Plattengreiferkopfes realisiert werden, der eine komplette Artikellage 10 nach unten durch Öffnen oder seitliches Verschieben seines verschiebbaren Bodens abladen kann.

Währenddessen bewegt sich der dem Transfertisch 34 zugeordnete erste Balken oder Schubbalken 46 wieder entlang der ersten Bewegungsbahn 48 zum Ausgangspunkt nach links zurück, wobei er während der Rückführbewegung oberhalb des Niveaus der Artikellage 10 bewegt wird, so dass er nicht mit einer solchen kollidieren kann. Der weitere Anlagebalken 52 der Beladestation 36 wird zudem wieder in horizontale Richtung nach links bewegt (Fig. 9c), um eine weitere Artikellage 10 stabilisieren zu können, während der dritte Schubbalken 54 vertikal nach oben bewegt wird (Fig. 9d), um eine darunter beförderte Artikellage 10 passieren zu lassen.

Es sei an dieser Stelle erwähnt, dass auch andere Bewegungsverläufe und Kombinationen der in den Figuren 5 bis 8 gezeigten Überschubbewegungen mit gleichen oder ähnlichen zusammenwirkenden Modulen 12, 14 und 30 möglich sind, ohne dass das Prinzip der Überschubbewegung von geschlossenen Artikellagen 10 dabei grundlegend verändert wird. Darüber hinaus sei betont, dass der gezeigte Bewegungsverlauf der Transfereinheit 34 vom höher liegenden Gruppiersystem 32 zur tiefer liegenden Beladestation 36 keineswegs einschränkend, sondern nur beispielhaft zu verstehen ist. So können sich auf dem Stapelplatz des Palettensegments 38 nach mehreren Überschubvorgängen mehrere übereinander gestapelte Artikellagen 10 befinden, so dass es notwendig sein kann, eine weitere Artikellage 10 nach der Übernahme vom Gruppiersystem 32 durch Anheben der Transfereinheit 34 zur Beladestation 36 zu überführen. In diesem - hier nicht dargestellten - Fall wird die Transfereinheit 34 nicht entsprechend Fig. 6b, Fig. 6c und Fig. 6d mit der darauf befindlichen Artikellage 10 auf das Niveau der Beladestation 36 abgesenkt, sondern ggf. auf ein Niveau einer dort zuoberst liegenden Artikellage 10 angehoben.

Eine weitere, hier jedoch nicht dargestellte Variante des Stapelverfahrens kann wahlweise vorsehen, dass auf der Beladestation 36 mehrere Artikellagen 10 gleichzeitig abgelegt werden. Durch die gleichzeitige Handhabung und Stapelung mehrerer Artikellagen 10 können die Palettenwechselzeiten deutlich reduziert werden. Hierdurch fungiert die Beladestation 36 als eine Art Zwischenspeicher, wodurch die erforderlichen Zeiten für einen Palettenwechsel minimiert werden können.

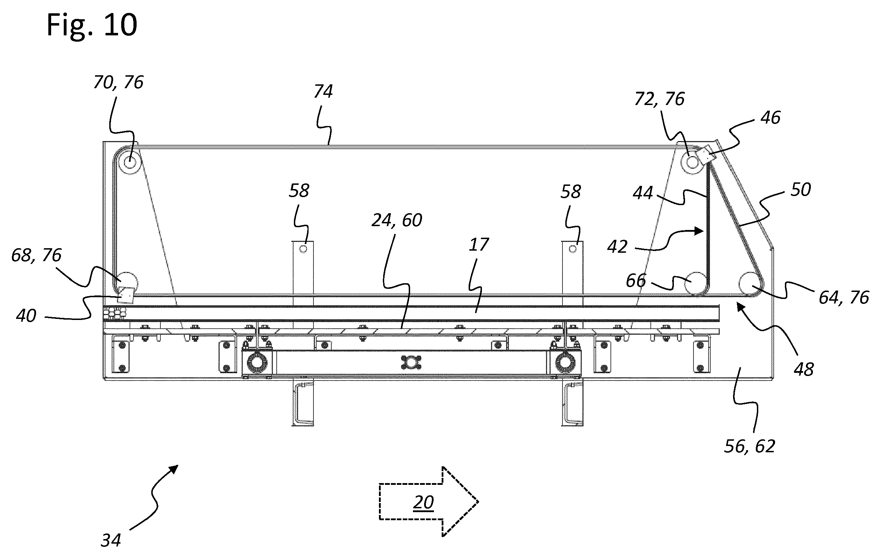

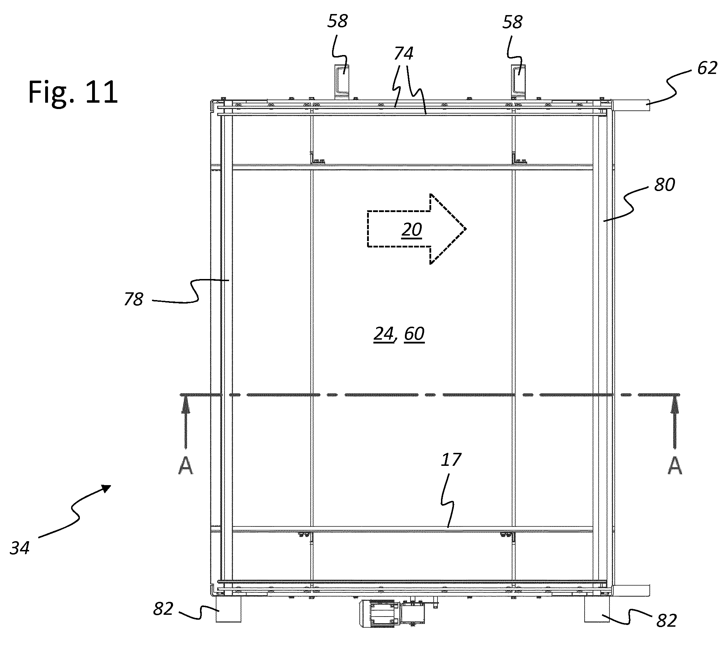

Die Figuren 10 bis 12 verdeutlichen in verschiedenen schematischen Ansichten eine Ausführungsvariante der erfindungsgemäßen höhenverstellbaren Transfereinheit 34, die einen Rahmen 56 mit seitlich und/oder unterhalb des Rahmens 56 angeordneten Verbindungselementen 58 zur Verbindung mit einer hier nicht dargestellten Hubeinheit oder Traverse o. dgl. sowie einer Auflageebene 24 zur horizontalen Verschiebung von Artikellagen zwischen den beiden schienenartigen seitlichen Führungen 17 aufweist. Die Auflageebene 24 kann Platten 60 aufweisen, die bspw. aus Holz, Kunststoff oder einem anderen Material geringer Rauheit bestehen können. Im gezeigten Ausführungsbeispiel sind drei solche Platten 60 aneinander gefügt, wobei die seitlichen Führungen 17 mit Verankerungsstegen befestigt sind, die aus den Fugen aneinander gefügter Platten 60 nach oben durch die Auflageebene 24 ragen. Der Rahmen 56 weist seitliche Wandelemente 62 auf, die als Verankerung für die Platten 60 der Auflageebene 24 sowie jeweils als Lagerungen für die Zugmittelantriebe 44 und 50 dienen.

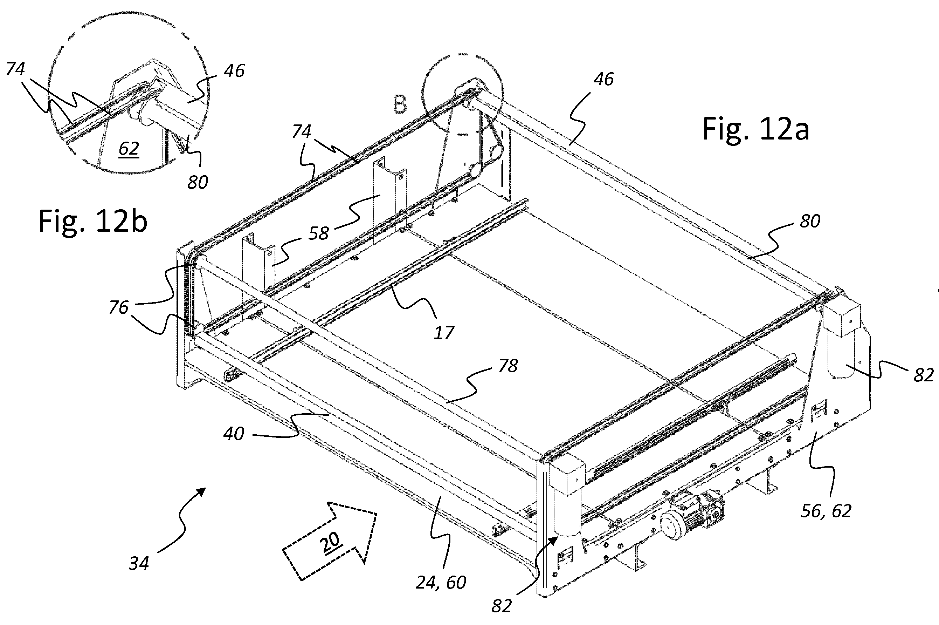

Wie die Figuren 10 und 12 erkennen lassen, reicht die erste Bewegungsbahn 48, welche der erste Zugmittelantrieb 50 mit dem ersten Balken 46 bzw. Schubbalken beschreibt, geringfügig über die Länge der Auflageebene 24 hinaus. Eine erste untere Umlenkung 64 der ersten Bewegungsbahn 48 ist gegenüber einer zweiten unteren Umlenkung 66 der zweiten Bewegungsbahn 42 mit dem zweiten Zugmittelantrieb 44 in Förderrichtung 20 der zu verschiebenden Artikellagen nach vorne verlagert, so dass der Abstand der beiden Umlenkungen 64 und 66 die Längenunterschiede der horizontalen Bewegungsabschnitte der beiden Bewegungsbahnen 48 und 42 definiert. Die hinteren unteren Umlenkungen 68 beider Bewegungsbahnen 48 und 42 fluchten dagegen miteinander bzw. haben die gleiche Achse, ebenso die hinteren oberen Umlenkungen 70 und die vorderen oberen Umlenkungen 72, da die entsprechenden Umlenkrollen für die Zugketten 74 oder Zugriemen der beiden Zugmittelantriebe 44 und 50 jeweils achsgleich zueinander angeordnet sind. Mit dem zweiten Zugmittelantrieb 44 wird der Anlagebalken 40 bewegt, der sich im gezeigten Ausführungsbeispiel nahe der hinteren unteren Umlenkung 68 und damit in Bereitschaftslage zur Übernahme einer Artikellage von einem vorgeordneten Modul der Anlage befindet, wie dies bspw. in der Fig. 8a gezeigt ist. Der Schubbalken 46 befindet sich gleichzeitig nahe der vorderen oberen Umlenkung 72, wo er aus dem Eingriffsbereich einer zu überschiebenden Artikellage gebracht ist.

Während die unteren Umlenkungen 64, 66 und 68 jeweils mit separaten, drehbar in den Wandelementen 62 gelagerten Rollen 76 zur Führung der Zugketten 74 der beiden Zugmittelantriebe 44 und 50 versehen sind, sind die beidseitig in den Wandelementen 62 gelagerten Rollen 76 der oberen Umlenkungen 70 und 72 über hintere und vordere Antriebswellen 78 bzw. 80 derart miteinander gekoppelt, dass die eine der beiden Antriebswellen 78 oder 80 mit dem ersten Zugmittelantrieb 50 gekoppelt ist, während die jeweils andere Antriebswelle 80 oder 78 mit dem zweiten Zugmittelantrieb 44 gekoppelt ist. Jeder der beiden Antriebswellen 78 und 80 ist ein separater elektrischer Antriebsmotor 82 zugeordnet, wodurch die Antriebswellen 78 und 80 mit unterschiedlichen Drehzahlen beaufschlagbar sind, was die unabhängige Steuerbarkeit der beiden Balken 40 und 46 zur Folge hat.

Weitere alternative Ausführungsvarianten, die hier nicht dargestellt sind, wären möglich. So müssen die beiden Antriebsmotoren 82 nicht zwingend räumlich voneinander entfernt am Rahmen 56 montiert sein. Anstelle der beiden Antriebswellen 78 und 80 kann auch eine doppelt wirkende Hohlwelle eingesetzt werden, die über einen geeigneten Antriebsmotor mit zwei koaxialen Abtriebswellen in Rotation versetzt werden können, wodurch die erfindungsgemäße Unabhängigkeit der Zugmittelantriebe für die Anlage- und Schubbalken 40 und 46 ebenso gegeben wäre. Wie oben erwähnt, kann anstelle des endlos umlaufenden zweiten Zugmittelantriebs 44 auch eine oszillierende Bewegungsbahn für den Anlagebalken 40 vorgesehen sein, die sich ggf. auch unterhalb der Auflageebene 24 erstrecken kann. In diesem Zusammenhang kann es zudem von Vorteil sein, den entsprechend gestalteten Anlagebalken 40 temporär als Verlängerung der Auflageebene 24 an deren frontseitigem Ende, ungefähr unterhalb der ersten unteren Umlenkung 64, zu nutzen, so dass eine Lücke zwischen der Auflageebene 24 und dem nachfolgenden Modul, auf das die Artikellage überschoben wird, weitgehend geschlossen werden kann.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 10: Artikellage, Artikelgruppe
- 12: erstes Modul
- 14: zweites Modul
- 16: Artikel, Gebinde, Behälter
- 17: seitliche Führung
- 18: Schubbalken
- 20: Vorschubbewegung
- 22: Schiebebewegung (Schubbalken)
- 24: Auflageebene
- 26: Anlagebalken
- 27: Schubbalken
- 28: Schiebebewegung (Anlagebalken)
- 30: drittes Modul
- 32: Gruppiertisch, Gruppiersystem
- 34: Transfereinheit, Transfertisch
- 36: Beladestation
- 38: Palettensegment
- 40: Anlagebalken, zweiter Balken
- 42: zweite Bewegungsbahn
- 44: zweiter Zugmittelantrieb
- 46: erster Balken, Schubbalken
- 48: erste Bewegungsbahn
- 50: erster Zugmittelantrieb
- 52: weiterer Anlagebalken
- 54: dritter Schubbalken
- 56: Rahmen
- 58: Verbindungselement
- 60: Platten
- 62: Wandelement
- 64: erste untere Umlenkung
- 66: zweite untere Umlenkung
- 68: hintere untere Umlenkung
- 70: hintere obere Umlenkung
- 72: vordere obere Umlenkung
- 74: Zugkette
- 76: Rollen
- 78: hintere Antriebswelle
- 80: vordere Antriebswelle
- 82: Antriebsmotor

## Patentansprüche

1. Transfereinheit (34) zur horizontalen Verschiebung einer Artikelgruppe oder Artikellage (10) zwischen wenigstens zwei benachbarten Modulen (12, 14, 30) unter weitgehender Beibehaltung der Relativpositionen einer die Artikelgruppe oder -lage (10) bildenden Mehrzahl von Artikeln (16) relativ zueinander, umfassend eine mit der Transfereinheit (34) verbundene horizontale Auflagefläche (24) für die Artikellage (10), wenigstens einen in Förder- oder Überschubrichtung (20) rückseitig an den Artikeln (16) angreifenden ersten Balken (46) oder Schubbalken (46) zum horizontalen Verschieben der Artikellage (10) auf ein benachbartes Modul (14, 30) in eine Ruhelage sowie wenigstens einen frontseitig an der Artikellage (10) angreifenden zweiten Balken (40) oder Anlagebalken (40), der in seiner Bewegung in Überschubrichtung (20) zumindest temporär mit dem Schubbalken (46) oder ersten Balken (46) gekoppelt ist und der Artikelgruppe oder -lage (10) zumindest kurz vor oder bei Erreichen der Ruhelage mit geringem Abstand zu den vordersten Artikeln (16) vorauseilt oder an diesen anliegt, wobei ein erster horizontaler Bewegungsabschnitt des ersten Balkens (46) oder Schubbalkens (46) zur Herstellung der horizontalen Schubbewegung in Höhe der auf der Auflagefläche (24) bewegten Artikellage (10) länger ist als ein zweiter horizontaler Bewegungsabschnitt des zweiten Balkens (40) oder Anlagebalkens (40) zur Herstellung der horizontalen Anlagebewegung für die Artikellage (10).

2. Transfereinheit nach Anspruch 1, bei der der erste Balken (46) und der zweite Balken (40) jeweils über separate, unabhängig voneinander steuerbare Antriebseinrichtungen verfügen.

3. Transfereinheit nach Anspruch 1 oder 2, bei der die Antriebseinrichtung des ersten Balkens (46) oder Schubbalkens durch einen oberhalb der horizontalen Auflagefläche (24) und abschnittsweise parallel zu dieser endlos umlaufenden ersten Zugmittelantrieb (50) zur Herstellung der horizontalen Schubbewegung in Höhe der auf der Auflagefläche (24) bewegten Artikellage (10) ausgebildet ist.

4. Transfereinheit nach einem der Ansprüche 1 bis 3, bei der die Antriebseinrichtung des zweiten Balkens (40) oder Anlagebalkens durch einen oberhalb der horizontalen Auflagefläche (24) endlos umlaufenden zweiten Zugmittelantrieb (44) zur Herstellung der horizontalen Anlagebewegung in Höhe der auf der Auflagefläche (24) bewegten Artikellage (10) ausgebildet ist.

5. Transfereinheit nach einem der Ansprüche 1 bis 3, bei der die Antriebseinrichtung des zweiten Balkens (40) oder Anlagebalkens durch einen zumindest abschnittsweise oberhalb der horizontalen Auflagefläche (24) oszillierenden Zugmittel- oder Gestängeantrieb zur Herstellung der horizontalen Anlagebewegung in Höhe der auf der Auflagefläche (24) bewegten Artikellage (10) ausgebildet ist.

6. Transfereinheit nach Anspruch 5, bei der der zweite Balken (40) oder Anlagebalken in einem in Förder- oder Überschubrichtung endseitigen Bewegungsanschlag eine Verlängerung der Auflagefläche (24) bildet.

7. Transfereinheit nach Anspruch 6, bei der der erste horizontale Bewegungsabschnitt des ersten Balkens (46) oder Schubbalkens über den in Förder- oder Überschubrichtung (20) endseitigen Rand der Auflagefläche (24) für die Artikellage (10) hinaus reicht.

8. Transfereinheit nach einem der Ansprüche 1 bis 7, die Teil einer Palettiervorrichtung zur Palettierung durch Stapeln von Artikellagen (10) übereinander auf einem der Transfereinheit (34) nachgeordneten Stapelplatz ist, wobei der vertikal beweglichen und die Artikellagen (10) in unterschiedlichen Höhen überschiebenden Transfereinheit (34) ein Gruppiersystem (32) vorgeordnet ist, von dem aus die aus einzelnen Artikeln (16) gebildeten und gruppierten Artikellagen (10) in horizontaler Richtung auf die in selber Höhe gehobene Transfereinheit (34) überschiebbar sind.

9. Verfahren zur horizontalen Verschiebung einer Artikelgruppe oder Artikellage (10) in eine oder aus einer Transfereinheit (34) gemäß einem der Ansprüche 1 bis 8 unter weitgehender Beibehaltung der Relativpositionen einer die Artikelgruppe oder -lage (10) bildenden Mehrzahl von Artikeln (16) relativ zueinander mittels wenigstens eines an den, in Bezug auf die Förder- bzw. Vorschubbewegung (20) rückseits der Artikelgruppe oder Artikellage (10) befindlichen Artikeln (16) angreifenden ersten Balkens (46) oder Schubbalkens in eine zweite Ruhelage, wobei ein zumindest temporär den in Förderrichtung (20) frontseitig befindlichen Artikeln (16) zugeordneter zweiter Balken (40) oder Anlagebalken der Artikelgruppe oder -lage (10) zumindest kurz vor oder bei Erreichen der Ruhelage mit geringem Abstand zu den vordersten Artikeln (16) vorauseilt oder an diesen anliegt, wobei der erste Balken (46) und der zweite Balken (40) in ihren Bewegungen jeweils unabhängig voneinander gesteuert werden.

## Claims

1. A transfer unit (34) for horizontally shifting an article group or article layer (10), which is formed from a plurality of articles (16,) between at least two adjacent modules (12, 14, 30) while largely maintaining the relative positions of said articles (16) in the article group or article layer (10) relative to each other, said transfer unit (34) comprising a horizontal support surface (24) for the article layer (10), which support surface (24) is connected to the transfer unit (34), at least one first bar (46) or pusher bar (46) engaging with the articles (16) from the back as seen in conveying direction or transfer direction (20) for the purpose of horizontally shifting the article layer (10) onto an adjacent module (14, 30) into a rest position, as well as at least one second bar (40) or contact bar (40) engaging with the article layer (10) from the front, which contact bar (40) is at least temporarily coupled with the pusher bar (46) or first bar (46) while moving in transfer direction (20) and which moves ahead of the article group or article layer (10) at a slight distance from or abutting on the foremost articles (16) at least shortly before or upon reaching the rest position, wherein a first section of the horizontal movement of the first bar (46) or pusher bar (46) for producing the horizontal pushing movement on a level with the article layer (10) that is being moved on the support surface (24) is longer than a second section of the horizontal movement of the second bar (40) or contact bar (40) for producing the horizontal contact movement for the article layer (10).

2. The transfer unit as recited in claim 1, in which the first bar (46) and the second bar (40) each have separate drive devices, which are controllable independently from one another.

3. The transfer unit as recited in claim 1 or 2, in which the drive device of the first bar (46) or pusher bar is formed by a first traction means drive (50), which endlessly circulates above the horizontal support surface (24) and in sections parallel to said support surface (24), for producing the horizontal pushing movement on a level with the article layer (10) that is being moved on the support surface (24).

4. The transfer unit as recited in one of the claims 1 to 3, in which the drive device of the second bar (40) or contact bar is formed by a second traction means drive (44), which endlessly circulates above the horizontal support surface (24), for producing the horizontal contact movement on a level with the article layer (10) that is being moved on the support surface (24).

5. The transfer unit as recited in one of the claims 1 to 3, in which the drive device of the second bar (40) or contact bar is formed by a traction means drive or linkage drive, which, at least in sections, oscillates above the horizontal support surface (24), for producing the horizontal contact movement on a level with the article layer (10) that is being moved on the support surface (24).

6. The transfer unit as recited in claim 5, in which the second bar (40) or contact bar forms an extension of the support surface (24) at a movement stop at the end side as seen in conveying direction or transfer direction.

7. The transfer unit as recited in claim 6, in which the first horizontal movement section of the first bar (46) or pusher bar extends beyond the edge of the support surface (24) for the article layer (10) at the end side as seen in conveying direction or transfer direction (20).

8. The transfer unit as recited in one of the claims 1 to 7, which is part of a palletising apparatus for palletising by stacking article layers (10) on top of one another in a stacking station arranged downstream of the transfer unit (34), wherein, arranged upstream of the vertically movable transfer unit (34) transferring the article layers (10) at different levels, is a grouping system (32) from which the article layers (10), which are formed and grouped from individual articles (16), can be transferred in horizontal direction to the transfer unit (34) having been raised to the same level.

9. A method for horizontally shifting an article group or article layer (10), which is formed from a plurality of articles (16), into or out of a transfer unit (34) according to one of the claims 1 to 8 into a second rest position while largely maintaining the relative positions of said articles (16) in the article group or article layer (10) relative to each other, by means of at least one first bar (46) or pusher bar engaging with the articles (16) located at the back of the article group or article layer (10) as seen in relation to the conveying movement or feed movement (20), as the case may be, wherein a second bar (40) or contact bar, which is at least temporarily assigned to the articles (16) located at the front as seen in conveying direction (20), moves ahead of the article group or article layer (10) at a slight distance from or abutting on the foremost articles (16) at least shortly before or upon reaching the rest position, wherein the first bar (46) and the second bar (40) are each controlled in their movements independently from one another.

## Revendications

1. Unité de transfert (34) destinée à déplacer horizontalement un groupe d'articles ou une couche d'articles (10) entre au moins deux modules (12, 14, 30) voisins, tout en maintenant dans une large mesure les positions relatives d'une pluralité d'articles (16) les uns par rapport aux autres formant le groupe ou la couche d'articles (10), comprenant une surface d'appui (24) horizontale pour la couche d'articles (10), qui est reliée à ladite unité de transfert (34), au moins une première barre (46) ou barre de poussée (46) qui se prend, dans la direction de transport ou de transfert par poussée (20), sur la face arrière des articles (10) et qui est destinée à déplacer horizontalement la couche d'articles (10) sur un module (14, 30) voisin dans une position de repos, ainsi qu'au moins une deuxième barre (40) ou barre d'appui (40) qui se prend sur la face frontale de la couche d'articles (10), qui, dans son mouvement dans la direction de transfert par poussée (20), est couplée au moins temporairement à la barre de poussée (46) ou première barre (46) et qui, au moins peu avant que la position de repos soit atteinte ou lorsqu'elle est atteinte, est en avance, d'une faible distance par rapport aux articles (16) situés le plus en avant, sur le groupe ou la couche d'articles (10) ou s'applique contre ceux-ci, dans laquelle une première portion de mouvement horizontale de la première barre (46) ou barre de poussée (46) pour réaliser le mouvement de poussée horizontal au niveau de la couche d'articles (10) déplacée sur la surface d'appui (24) est plus longue qu'une deuxième portion de mouvement horizontale de la deuxième barre (40) ou barre d'appui (40) pour réaliser le mouvement d'appui horizontal pour la couche d'articles (10).

2. Unité de transfert selon la revendication 1, dans laquelle la première barre (46) et la deuxième barre (40) disposent chacune de dispositifs d'entraînement séparés aptes à être commandés indépendamment l'un de l'autre.

3. Unité de transfert selon la revendication 1 ou 2, dans laquelle le dispositif d'entraînement de la première barre (46) ou barre de poussée est constitué par un premier entraînement à mécanisme de traction (50) circulant sans fin au-dessus de la surface d'appui (24) horizontale et par sections parallèlement à celle-ci et destiné à réaliser le mouvement de poussée horizontal au niveau de la couche d'articles (10) déplacée sur la surface d'appui (24).

4. Unité de transfert selon l'une quelconque des revendications 1 à 3, dans laquelle le dispositif d'entraînement de la deuxième barre (40) ou barre d'appui est constitué par un deuxième entraînement à mécanisme de traction (44) circulant sans fin au-dessus de la surface d'appui (24) horizontale et destiné à réaliser le mouvement d'appui horizontal au niveau de la couche d'articles (10) déplacée sur la surface d'appui (24).

5. Unité de transfert selon l'une quelconque des revendications 1 à 3, dans laquelle le dispositif d'entraînement de la deuxième barre (40) ou barre d'appui est constitué par un entraînement à mécanisme de traction ou à tringles oscillant, au moins par sections, au-dessus de la surface d'appui (24) horizontale et destiné à réaliser le mouvement d'appui horizontal au niveau de la couche d'articles (10) déplacée sur la surface d'appui (24).

6. Unité de transfert selon la revendication 5, dans laquelle la deuxième barre (40) ou barre d'appui forme, dans une butée de mouvement située du côté d'extrémité dans la direction de transport ou de transfert par poussée, une rallonge de la surface d'appui (24).

7. Unité de transfert selon la revendication 6, dans laquelle la première section de mouvement horizontale de la première barre (46) ou barre de poussée s'étend au-delà du bord de la surface d'appui (24) pour la couche d'articles (10), lequel est situé du côté d'extrémité dans la direction de transport ou de transfert par poussée (20).

8. Unité de transfert selon l'une quelconque des revendications 1 à 7, qui fait partie d'un dispositif de palettisation destiné à la palettisation par empilement de couches d'articles (10) les unes sur les autres sur un emplacement d'empilement situé en aval de l'unité de transfert (34), dans lequel en amont de ladite unité de transfert (34) qui est déplaçable verticalement et qui transfère en poussant les couches d'articles (10) à des niveaux différents est disposé un système de groupement (32) à partir duquel les couches d'articles (10) constituées par des articles individuels (16) et groupées peuvent être transférées par poussée, dans la direction horizontale, sur l'unité de transfert (34) soulevée au même niveau.

9. Procédé de déplacement horizontal d'un groupe d'articles ou d'une couche d'articles (10) dans une ou hors d'une unité de transfert (34) selon l'une quelconque des revendications 1 à 8, tout en maintenant dans une large mesure les positions relatives d'une pluralité d'articles (16) les uns par rapport aux autres formant le groupe ou la couche d'articles (10), au moyen d'au moins une première barre (46) ou barre de poussée qui se prend sur les articles (16) lesquels sont situés sur la face arrière du groupe d'articles ou de la couche d'articles (10) par rapport au mouvement de transport ou bien d'avance (20), dans une deuxième position de repos, dans lequel une deuxième barre (40) ou barre d'appui qui est associée, au moins temporairement, aux articles (16) situés sur la face frontale dans la direction de transport (20), est en avance, au moins peu avant que la position de repos soit atteinte ou lorsqu'elle est atteinte, d'une faible distance par rapport aux articles (16) situés le plus en avant, sur le groupe ou la couche d'articles (10) ou s'applique contre ceux-ci, la première barre (46) et la deuxième barre (40) étant commandées chacune indépendamment l'une de l'autre dans leurs mouvements.
